# EUROPEAN PATENT APPLICATION

(11) **EP 1 469 246 A1**
(43) Date of publication of application: **20.10.2004**
(21) Application number: 04008510.2
(22) Date of filing: 07.04.2004
(51) Int. Cl.: F16L 37/00, F16L 41/12, F16L 3/10, F16L 33/12

(54) **Device for coupling supports of valves, nozzles, jets or the like to fluid distribution pipes**

(30) Priority: 18.04.2003 IT MO20030111
(71) Applicant: Arag S.r.l., 42048 Rubiera (Emilia) (IT)
(72) Inventor: Greco, Fabrizio, 41100 Modena (IT)
(74) Representative: Modiano, Guido, Dr.-Ing.

(57) **Abstract**

A device for coupling supports for valves, nozzles, jets or the like to fluid distribution pipes, comprising a ring (6) that is divided into a first arc (7) and a second arc (8), which are mutually complementary and are pivoted (A) at a respective end (7a,8a), are free at the opposite end (7b,8b), and are suitable to surround externally a fluid distribution pipe (T), one of the first and second arcs (7,8) being associable with a support (4) for valves, nozzles, jets or the like, and a lever (10) for closing the ring (6), which is articulated to the opposite end (7b) of the first arc (7) and is provided with at least one tooth (11) for engaging a pin (12) formed at the opposite end (8b) of the second arc (8).

## Description

The present invention relates to a device for coupling supports of valves, nozzles, jets or the like to fluid distribution pipes.

It is known to use in various industrial and/or agricultural sectors systems or machines for distributing or spraying fluids in general, such as for example washing or humidification systems, irrigation systems or self-propelled machines, or others.

These systems and/or machines substantially comprise a supporting framework, to which distribution pipes supplied with a generally pressurized fluid, drawn from appropriately provided reservoirs, are fixed.

Bleeding holes are formed along the pipes, and a respective branching assembly is fitted at each hole; a branching assembly is substantially constituted by a support for one or more discharge nozzles or jets and/or adjustment valves.

Coupling devices for fixing branching assemblies to pipes are known which are substantially constituted by a ring that is divided into two mutually complementary arcs that are suitable to surround a pipe externally, the branching assembly being associated with one of the two arcs.

In one possible embodiment, the two arcs are separate from each other and are extended, at their respective opposite ends, with flanges in which there are holes for the insertion of threaded fastening means.

In an alternative embodiment, the two arcs are mutually pivoted at one end and are extended, at the respective opposite end, with a flange in which there is a respective hole for the insertion of threaded fastening means.

These known coupling devices are not free from drawbacks, including the fact that their fitting and removal require the execution of long, awkward and troublesome operations, which are caused in particular by the use of threaded means for fastening the two arcs.

Another drawback of known coupling devices is that their fitting and removal require operators to use specific fastening and adjustment tools, such as wrenches or the like.

Another drawback of known coupling devices is that they do not ensure stable coupling of the branching assemblies, particularly if applied to pipes for distributing pressurized fluids.

The aim of the present invention is to eliminate the above-mentioned drawbacks and still others of known coupling devices, by providing a device for coupling supports of valves, nozzles, jets or the like to fluid distribution pipes that allows to simplify and facilitate the operations for its fitting on and removal from pipes, to contain their execution times and to eliminate the use of specific fastening and adjustment tools.

Within this aim, an object of the present invention is to provide a coupling device that allows to ensure a stable coupling of the branching assemblies even to pipes for distributing pressurized fluids.

Another object of the present invention is to provide a coupling device that is simple, relatively easy to provide in practice, safe in use, effective in operation, and has a relatively low cost.

This aim and these and other objects that will become better apparent hereinafter are achieved by the present device for coupling supports for valves, nozzles, jets or the like to fluid distribution pipes, comprising a ring that is divided into a first arc and a second arc, which are mutually complementary and are pivoted at a respective end, are free at the opposite end, and are suitable to surround externally a fluid distribution pipe, one of said first and second arcs being associable with a support for valves, nozzles, jets or the like, characterized in that it comprises a lever for closing said ring, which is articulated to the opposite end of said first arc and is provided with at least one tooth for engaging a pin formed at the opposite end of said second arc.

Further characteristics and advantages of the present invention will become better apparent from the following detailed description of a preferred but not exclusive embodiment of a device for coupling supports of valves, nozzles, jets or the like to fluid distribution pipes, illustrated by way of non-limiting example in the accompanying drawings, wherein:
Figure 1 is a schematic perspective view of a coupling device according to the invention, in the removed configuration;
Figure 2 is a schematic perspective view of the coupling device of Figure 1, in the configuration in which it is fitted on a pipe;
Figure 3 is a schematic perspective view of a second embodiment of the coupling device according to the invention, in the removed configuration;
Figure 4 is a schematic perspective view of the coupling device of Figure 3, in the configuration in which it is fitted to a pipe.

With reference to the figures, the reference numeral 1 generally designates a device for coupling supports of valves, nozzles, jets or the like to fluid distribution pipes T.

The pipe T, which is shown partially, can be anchored for example to a supporting framework of a system or machine for distributing or spraying fluids in general, such as for example an industrial and/or agricultural washing or humidification system, an irrigation system or self-propelled machine, or others.

The fluid to be distributed can be constituted for example by water, disinfectant, herbicide, fungicide, insecticide, fertilizer or others.

The pipe T has one or more fluid bleeding holes 2, with each of which a branching assembly 3 is associated; said branching assembly substantially comprises a support 4 that is provided with a duct 5, the inlet 5a of which can be inserted in the hole 2; discharge nozzles or jets and/or adjustment valves, not shown, are associable with the support 4 and are connected to the outlet of the duct 5.

The device 1 comprises a ring 6 for coupling to the pipe T, which is divided into a first arc 7 and into a second arc 8, which are mutually complementary and are pivoted, at a respective end 7a and 8a, about an arc pivoting axis A formed by a pivot 9, and are free at their respective opposite end 7b and 8b.

The first arc 7 and the second arc 8 are suitable to surround the pipe T externally.

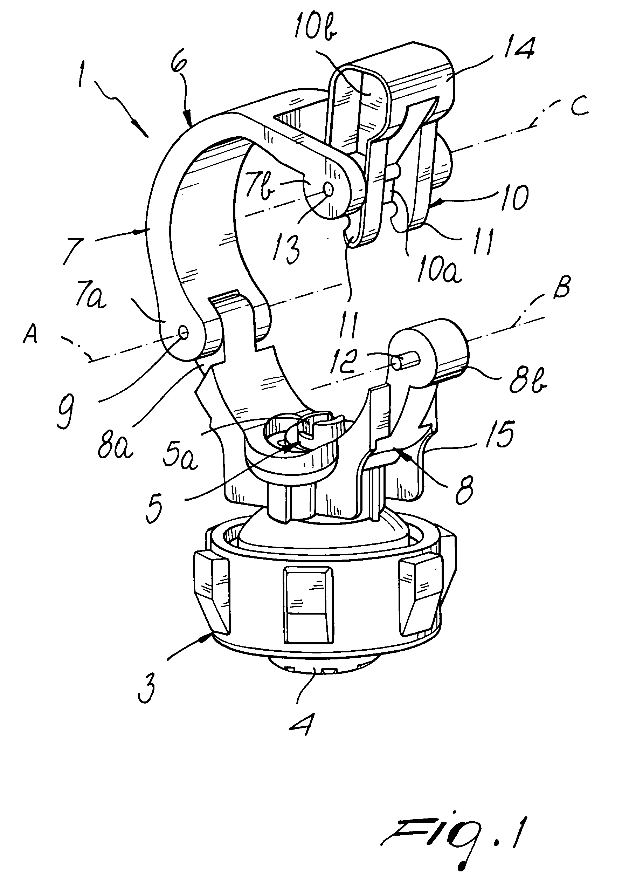

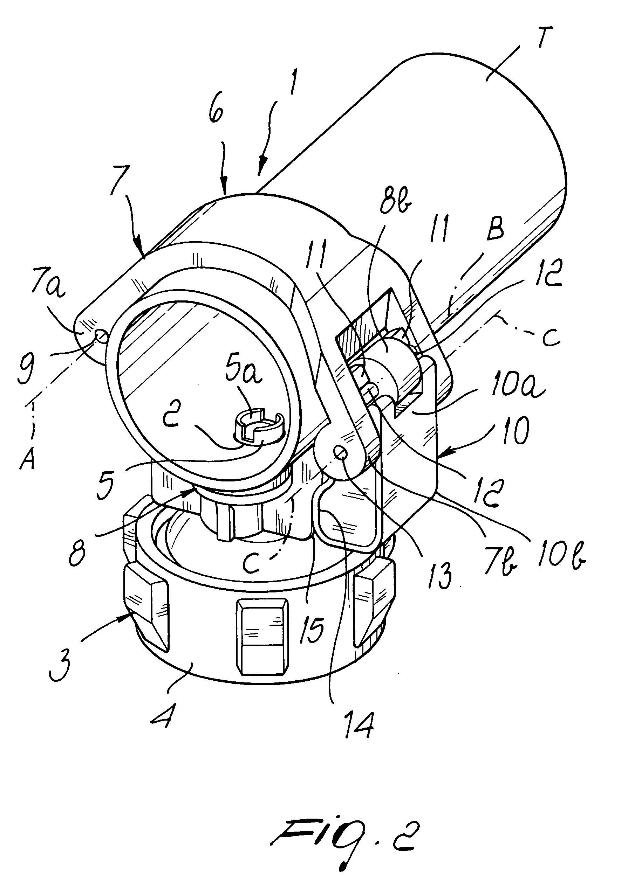

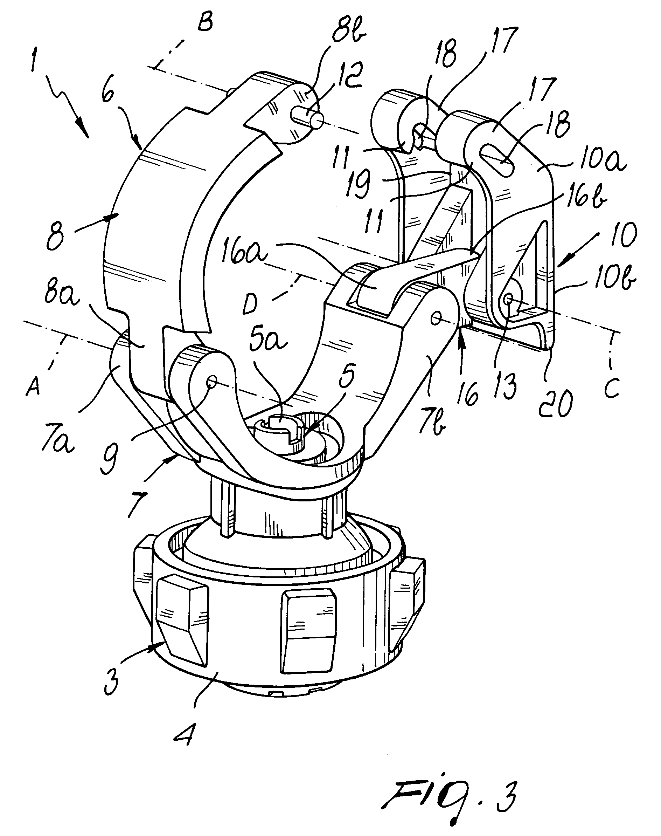

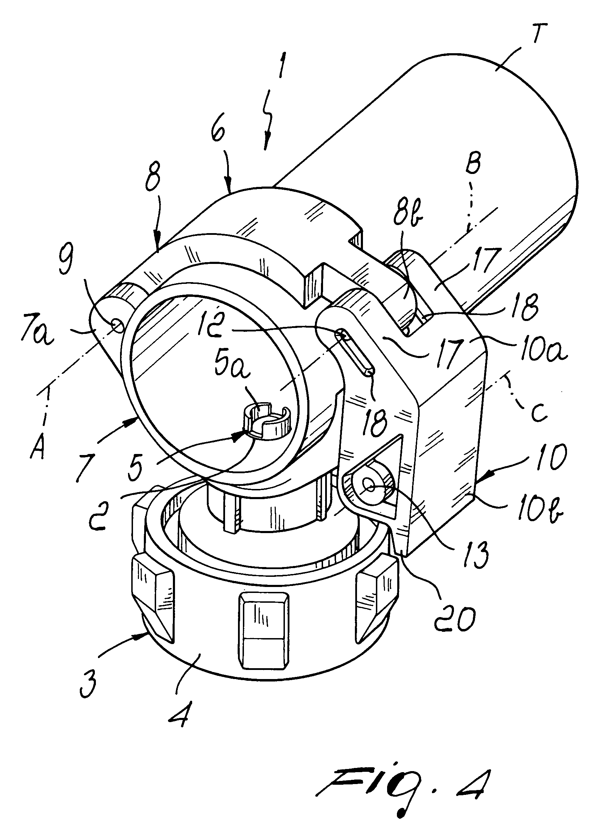

In the present description, the distinction between the first arc 7 and the second arc 8 is non-limiting; in particular, the branching assembly 3 can be associated with the first arc 7 (Figures 3 and 4) or with the second arc 8 (Figures 1 and 2).

The device 1 further comprises a lever 10 for closing the ring 6, i.e., the two arcs 7 and 8, which is articulated to the opposite end 7b of the first arc 7 and is provided with at least one tooth 11 for engaging a corresponding, at least one pin 12 that is formed at the opposite end 8b of the second arc 8; the axis B of the pin 12 is substantially parallel to the pivoting axis A of the first arc 7 and of the second arc 8.

The lever 10 is articulated, at its opposite end 7b, so that it rotates about a lever axis C that is formed by an additional pivot 13 and is substantially parallel to the pivoting axis A.

The lever 10 has a first end 10a at which there are two teeth 11, which are mutually parallel and arranged in a fork-like configuration and are suitable to engage two corresponding pins 12 that are formed, in a mutually coaxial and cantilevered configuration, on opposite sides with respect to the free end 8b of the second arc 8.

The second end 10b of the lever 10 is free and is articulated about the additional pivot 13 in a portion that is comprised between its first end 10a and its second end 10b.

In the embodiment shown in Figures 1 and 2, the second end 10b of the lever 10 has a contoured lug 14 that can engage by snap action a corresponding seat 15 formed at the opposite end 8b of the second arc 8.

In the second embodiment shown in Figures 3 and 4, the device 1 comprises a linkage 16, which has a first end 16a that is pivoted about an axis D that is substantially parallel to the pivoting axis A, at the opposite end 7b of the first arc 7, and a second end 16b, with which the additional articulation pivot 13 of the lever 10 is associated.

The first end 10a of the lever 10 is extended by at least one connection lug, in particular two parallel lugs 17, in the embodiment of Figure 4, which end with teeth 11 and in each of which a slot 18 is provided that is open and connected to the respective tooth 11, inside which the respective pin 12 is guided so that it can slide.

A seat 19 for containing the linkage 16 when the first arc 7 and the second arc 8 are arranged so as to surround the pipe T is formed between the two lugs 17.

The second end 10b of the lever 10 is extended by a grip tab 20.

Operation of the invention is as follows:

In order to fit the device 1 on the pipe T, the second arc 8 or the first arc 7, depending on which of said arcs supports the branching assembly 3, is arranged around the pipe T so that the duct 5 is inserted in the hole 2.

In order to lock the first arc 7 to the second arc 8 or vice versa and thus close the ring 6 around the pipe T, one acts on the lever 10 in order to engage the teeth 11 with the pins 12 and lock said lever.

In the embodiment shown in Figures 1 and 2, the locking of the lever 10 is ensured not only by the reaction between the teeth 11 and the pins 12 but also by the lug 14, which engages by snap action in the seat 15.

In the second embodiment shown in Figures 3 and 4, the locking of the lever 10 is ensured not only by the reaction between the teeth 11 and the pins 12 but also by the linkage 16, which acts as a contrast element.

To remove the device 1, it is sufficient to lift the lever 10 in order to disengage the pins 12 from the teeth 11 and thus open the ring 6.

In practice it has been found that the described invention achieves the intended aim and objects.

The mounting and removal of the coupling device according to the invention are in fact simple, quick and easy to perform; it is in fact sufficient to act on the closure lever to fix the device to a fluid distribution pipe.

It is noted that mounting and removal of the coupling device according to the invention do not require a fastening or adjustment tool.

The coupling device according to the invention, moreover, ensures stable and safe coupling even to pressurized fluid distribution pipes.

The invention thus conceived is susceptible of numerous modifications and variations, all of which are within the scope of the appended claims.

All the details may further be replaced with other technically equivalent elements.

In practice, the materials used, as well as the shapes and dimensions, may be any according to requirements without thereby abandoning the protective scope of the appended claims.

The disclosures in Italian Patent Application No. M02003A000111 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for coupling supports for valves, nozzles, jets or the like to fluid distribution pipes, comprising a ring (6) that is divided into a first arc (7) and a second arc (8), which are mutually complementary and are pivoted (A) at a respective end (7a,8a), are free at the opposite end (7b,8b), and are suitable to surround externally a fluid distribution pipe (T), one of said first and second arcs (7,8) being associable with a support (4) for valves, nozzles, jets or the like, **characterized in that** it comprises a lever (10) for closing said ring (6), which is articulated to the opposite end (7b) of said first arc (7) and is provided with at least one tooth (11) for engaging a pin (12) formed at the opposite end (8a) of said second arc (8).

2. The device according to claim 1, **characterized in that** said lever (10) is articulated so that it can rotate about an axis (C) that is substantially parallel to the pivoting axis (A) of said first and second arcs (7,8).

3. The device according to one or more of the preceding claims, **characterized in that** said pins (12) are substantially parallel to said pivoting axis (A).

4. The device according to one or more of the preceding claims, **characterized in that** said pins (12) are two and are arranged substantially coaxially to each other and so as to cantilever out on opposite sides with respect to said free end (8b) of the second arc (8), said engagement teeth (11) being two and being arranged so that they are substantially parallel to each other in a fork-like configuration.

5. The device according to one or more of the preceding claims, **characterized in that** said lever (10) comprises a first end (10a), at which said engagement teeth (11) are provided, and a second end (10b), the lever (10) being articulated (13) in a portion comprised between said first end (10a) and said second end (10b).

6. The device according to one or more of the preceding claims, **characterized in that** said lever (10) comprises a lug (14) that is formed proximate to said second end (10b) and can engage by snap action a corresponding seat (15) formed in said second arc (8).

7. The device according to one or more of the preceding claims, **characterized in that** it comprises a linkage (16), which has a first end (16a) that is pivoted (D) to said opposite end (7b) of the first arc (7) and a second end (16b) that is pivoted (C) to said lever (10).

8. The device according to one or more of the preceding claims, **characterized in that** the pivoting axes (C,D) of said linkage are substantially parallel to said pivoting axis (A) of said arcs (7,8).

9. The device according to one or more of the preceding claims, **characterized in that** said lever (10) comprises at least one lug (17) that protrudes from said first end (10a) and at which said engagement tooth (11) is formed, said lug (17) being provided with a slot (18) for the sliding of said pin (12), said slot (18) being open at said engagement tooth (11).

10. The device according to one or more of the preceding claims, **characterized in that** said lever (10) comprises a seat (19) for containing said linkage (16), said first and second arcs (7,8) being arranged so as to surround said pipe (T).

11. The device according to one or more of the preceding claims, **characterized in that** said lever (10) comprises a grip tab (20) that is formed at said second end (10b).
